# EUROPÄISCHE PATENTANMELDUNG

(11) **EP 0 569 332 A2**
(43) Veröffentlichungstag der Anmeldung: **10.11.1993**
(21) Anmeldenummer: 93810313.2
(22) Anmeldetag: 29.04.1993
(51) Int. Cl.: G06F 15/21

(54) **Verfahren zur Datenverarbeitung**

(30) Priorität: 06.05.1992 CH 1456/92
(71) Anmelder: HEWALD-ENGINEERING, CH-6170 Schüpfheim (CH)
(72) Erfinder: Waldvogel, Heinz, CH-6170 Schüpfheim (CH)
(74) Vertreter: OK pat AG

(57) **Zusammenfassung**

Das Verfahren wird gemäss einem ersten Aspekt in einem rechnergesteuerten Kommunikationsnetzwerk mit mehreren Teilnehmern, gemäss einem zweiten Aspekt dagegen mit einem einzigen Rechner (Teilnehmer) durchgeführt. Es werden ausgehend von gespeicherten Basisdaten individuelle Datensätze (Sets) erzeugt und - gegebenenfalls - den andern Teilnehmern zur Verfügung gestellt. Jeder Datensatz wird mit einem dem Erzeuger eindeutig zugeordneten Code versehen bzw. - bei qualitativ unterschiedlichen Datensätzen - mit einem Code, welcher die Qualität eindeutig kennzeichnet. Jeder Datensatz wird ferner mit mindestens einem Attribut versehen, für welches der (gegebenenfalls) jeweilige Erzeuger allein verantwortlich ist.

## Beschreibung

Die Erfindung betrifft - gemäss einem ersten Aspekt - ein Verfahren zur Datenverarbeitung in einem rechnergesteuerten Kommunikationsnetzwerk mit mehreren, Datenquellen bildenden Teilnehmern.

Mit der vorliegenden Erfindung sollen häufig sich wiederholende und relativ verwickelte Arbeitsabläufe rationalisiert, standardisiert und vereinfacht werden; Beispiele solcher Arbeitsabläufe sind z.B. das Erstellen von Angeboten, bei denen mehrere Tätigkeiten, Materialien und/oder Gerätschaften einbezogen sind, ferner das Planen und Vorbereiten von industriellen oder gewerblichen Herstellungs- oder Montagearbeiten mit einer Mehrzahl von Werkstoffen, Einzelteilen, Werkzeugen, Maschinen usw. Häufig sind an solchen Abläufen mehrere Teilnehmer (in unterschiedlichen Eigenschaften) beteiligt, z.B. Hersteller bzw. Lieferanten einerseits und Bezüger bzw. Verwender anderseits.

Gemäss dem genannten ersten Aspekt wird diese Aufgabe dadurch gelöst, dass von den Teilnehmern, ausgehend von gespeicherten Basisdaten, individuelle Datensätze (Sets) erzeugt und den andern Teilnehmern zur Verfügung gestellt werden, wobei jeder erzeugte Datensatz mit einem dem erzeugenden Teilnehmer eindeutig zugeordneten Code (Relation) und mit mindestens einem Attribut, für welches der Erzeuger allein verantwortlich ist, versehen wird.

Dieses Verfahren ermöglicht eine effiziente Kommunikation der Teilnehmer untereinander zwecks Bereitstellung der benötigten Daten, sowie insbesondere die erheblich erleichterte, standardisierte Abwicklung der betreffenden Arbeitsabläufe selbst. In diesem Zusammenhang kann es zweckmässig sein, die Basisdaten wie auch die erzeugten Datensätze und ggf. weitere, zugeordnete Informationen in einer zentralen, am Netzwerk angeschlossenen Datenbank zu speichern.

Nicht immer sind jedoch an den erwähnten Arbeitsabläufen mehrere Teilnehmer beteiligt, vielmehr kann es sich um "interne", über einen einzelnen Rechner abzuwickelnde Vorgänge handeln. Dementsprechend ist ein erfindungsgemässes Datenverarbeitungsverfahren - gemäss einem zweiten Aspekt der Erfindung - dadurch gekennzeichnet, dass, ausgehend von gespeicherten Basisdaten und mit diesen verknüpft, qualitativ unterschiedliche Datensätze (Sets) erzeugt und gespeichert werden, wobei jeder erzeugte Datensatz mit einem seiner Qualität eindeutig zugeordneten Code (Relation) und mit mindestens einem Attribut versehen wird, welches nur unter bestimmten, von der Qualität abhängigen Umständen geändert werden darf. - In diesem Fall (der als "Grenzfall" mit nur einem Teilnehmer aufgefasst werden kann), tritt also gewissermassen an die Stelle der Teilnehmer-Kennung eine Kennung der Qualität (eine unter mehreren Eigenschaften), und die Verantwortlichkeit der erzeugenden Teilnehmer ist ersetzt durch festgelegte Regeln, nach welchen die DatensatzAttribute (nur) geändert werden können.

Den weiteren Ausführungen zur Erläuterung der Erfindung werden die nachstehenden Definitionen zugrunde gelegt; die zu den einzelnen Definitionen gegebenen Beispiele beruhen auf der Annahme, dass mit Hilfe des Verfahrens Offerteingaben im Malergewerbe erstellt werden sollen.

### Definitionen:

- Basisartikel (abgk.: BA): Beschreibung einer Tätigkeit oder eines materiellen Objektes (Bauteils)
   Beispiel: Wandstreichen mit Dispersionsfarbe
- Komponente: Teildaten für die Erbringung oder Erzeugung eines Basisartikels mit möglichst genauen Mengen- und/oder anderen Angaben pro Basisartikel (die Anzahl k der Komponenten pro Set ist beliebig)
   Beispiel: 0.25 kg pro m² Dispersion xy von Lieferant XY
- Source: Bezugsort von Komponenten (Firma, Lagerplatz usw.) Beispiel: Lieferant XY
- Relation (abgk.: Rel): Alphanumerischer Code (Teilnehmer-Code), welcher eindeutig einer Source zugeordnet ist
   Beispiel: 010 = XY+Co. CH-81xx Musterlingen
- Set (Datensatz):
   -- formal: Formalismus bestehend aus einer Relation und einer Set-Nummer (siehe unten)
      Beispiel: 010-3, wobei
      "010" = Relation und
      "3" = Set-Nummer
   -- inhaltlich: Bezeichnung für eine bestimmte Zusammenstellung von k Komponenten für die Erbringung oder Erzeugung eines Basisartikels
      Beispiel: 010-3: 0.25 kg Dispersion xy pro m² für BA
   -- Set-Nummer: Pro Relation kann ein Basisartikel vermittels verschiedener Zusammenstellungen von Komponenten erbracht oder erzeugt werden; aus der Set-Nummer lässt sich auf die Art der Zusammenstellung der Komponenten schliessen (eine Kennung)
      - Beispiel:: Set-Nr. 1: konventionelle Komponenten
      Set-Nr. 2: wasserlösliche Komponenten
      Set-Nr. 3: ökologisch günstige Komponenten
      Set-Nr. 4: preisgünstige Komponenten
      usw.
   -- Je nach Erzeuger können verschiedenartige Sets unterschieden werden:
      --- Basis-Set (abgk.: BS): enthält allgemein gehaltene Komponenten und wird von einer Basissource erstellt und gewartet (als Relation könnte 001 genommen werden)
         Beispiel: 001-1: 0.3 kg Dispersion pro m² für BA
      --- User-Set (abgk.: US): enthält Komponenten von beliebigen Sourcen und wird vom User erstellt und gewartet (als Relation könnte 002 genommen werden)
         Beispiel: 002-1: 0.2 kg Dispersion xy pro m² für BA
      --- Source-Set (abgk.: SS): enthält nur Komponenten der Source XY und wird von dieser Source erstellt und gewartet (als Relation könnte 010 genommen werden)
         Beispiel: 010-1: 0.35 kg Dispersion xy pro m² für BA
   -- Set-Anzahl: Anzahl i der pro Relation und pro Basisartikel bereitgestelltn Sets
      Beispiel: zur Erbringung oder Erzeugung des einen Basisartikels gibt es genau die 8 Varianten
      001-1 0.3 kg Dispersion pro m² für BA
      002-1 0.2 kg Dispersion xy pro m² für BA
      002-2 0.22 kg Dispersion uv pro m² für BA
      010-1 0.35 kg Dispersion xy pro m² für BA
      010-2 0.2 kg Dispersion xyz pro m² für BA
      020-1 0.21 kg Dispersion uv pro m² für BA
      020-2 0.32 kg Dispersion uvw pro m² für BA
      020-3 0.27 kg Dispersion uvx pro m² für BA
   -- Set-Gruppe: Zusammenfassung aller Sets mit gleicher Relation pro Basisartikel
      Beispiel:
      020-1 0.21 kg Dispersion uv pro m² für BA
      020-2 0.32 kg Dispersion uvw pro m² für BA
      020-3 0.27 kg Dispersion uvx pro m² für BA
   -- Set-Attribut:
      --- Attribut 1:
         a) Notwendig: BA benötigt mindestens eine Komponente pro Set
         b) Nicht notwendig: BA benötigt keine Komponente pro Set
      --- Attribut 2:
         a) Vollständig: BA wird vermittels des gewählten Sets vollständig erzeugt oder erbracht
         b) Unvollständig: BA wird vermittels des gewählten Sets nicht vollständig erzeugt oder erbracht
         Anmerkung: Ist das Set-Attribut 1 "nicht notwendig", so wird das Set-Attribut 2 als "vollständig" betrachtet
   -- Set-Darstellung:
      Ein vollständiges Set wird in gerader Schrift, ein unvollständiges kursiv dargestellt
   -- Erweiterung: Das Verfahren der Sets kann singemäss fortgesetzt werden mit Subsets als Set pro Set

Der Datenverarbeitung im Netzwerk bzw. mit einem Rechner liegt anhand vorstehender Definitionen das folgende Konzept zugrunde:

### Konzept:

- Erzeugen von Basisartikeln:
   a) Alle Sources können jederzeit Basisartikel erzeugen und diese anderen Sources zur Verfügung stellen
   b) Der Erzeuger lässt sich anhand der Relation feststellen
   c) Der Erzeuger ist allein verantwortlich für das Set-Attribut 1 "notwendig/nicht notwendig"; nur er kann dieses Attribut ändern
- Erzeugen von Komponenten:
   a) Alle Sources können jederzeit Komponenten erzeugen und diese anderen Sources zur Verfügung stellen
   b) Der Erzeuger lässt sich anhand der Relation feststellen
   c) Der Erzeuger kann diejenigen Felder bezeichnen, deren Inhalt von anderen Sources geändert werden darf (z.B. der Preis)
- Erzeugen von Sets:
   a) Alle Sources können jederzeit und zu jedem Basisartikel Sets erzeugen und diese anderen Sources zur Verfügung stellen
   b) Der Erzeuger lässt sich anhand der Relation feststellen
   c) Der Erzeuger ist allein verantwortlich für das SetAttribut 2 "vollständig/unvollständig"; nur er kann dieses Attribut ändern.

Das nachstehende Ausführungsbeispiel betrifft teilweise wieder das Malergewerbe, lässt sich aber analog auf die verschiedensten anderen Situationen, wie weiter oben ausgeführt, übertragen. Für "Basisartikel" können insbesondere im Baugewerbe eingeführte, dort als "Devis" bezeichnete Arbeitspositionen als Grundlage genommen werden. Wenn auch nachstehend z.B. von verschiedenen Lieferanten die Rede ist und somit an einen Netzwerkverbund mit einer Mehrzahl von Teilnehmern gedacht ist, so spielt sich das Verfahren der Set-Erstellung auch mit nur einem Teilnehmer prinzipiell gleich ab, und es bestehen grundsätzlich die gleichen Möglichkeiten und Varianten.

### Anwendungsbeispiel:

Ein Anwender (User) des Verfahrens möchte mehrere Basisartikel offerieren. Er möchte seinem Kunden verschiedene Ausführungs-Varianten zur Offerte beilegen, welche unter den Begriffen
- konventionell
- ökologisch sinnvoll
- preisgünstig
   (usw.)

die zugehörigen Materialien, Mengen, Preise, Inhaltsstoffe (z.B. Schadstoffe) usw. aufzeigen.

Um sein Vorhaben zu realisieren, kann der Anwender entweder auf bestehende Sets von Lieferanten Xi zurückgreifen, welche pro Basisartikel zu obigen Begriffen je ein Set bereitstellen, oder er kann eigene Sets erzeugen und verwenden.

Lieferanten-Sets:
Die Lieferanten Xi können aufgrund ihrer Produktepalette die Basisartikel unter den verschiedenen Begriffen konventionell, ökologisch sinnvoll, preisgünstig usw. vollständig oder nur unvollständig erzeugen. Sie erstellen Sets pro Basisartikel und deklarieren diese entsprechend als "vollständig" oder "unvollständig". Diese Sets werden den Anwendern ihrer Produkte zur Verfügung gestellt.

Einige Möglichkeiten für die Realisierung von Sets durch den Anwender zuhanden seiner Offerte:
1) alle Basisartikel vermittels Lieferant X1 entweder konventionell, ökologisch sinnvoll, preisgünstig
2) alle Basisartikel vermittels Lieferant X1, davon einige konventionell, andere ökologisch sinnvoll
3) einige Basisartikel vermittels Lieferant X1 konventionell, andere Basisartikel vermittels Lieferant X2 ökolog. sinnvoll, andere Basisartikel vermittels Lieferant X3 preisgünstig
4) Falls in obigen Beispielen Sets als "unvollständig" ausgewiesen werden, können beliebige andere Sets zur Anwendung kommen
5) Der Anwender erzeugt eigene Sets pro Basisartikel; dabei können die einzelnen Komponenten pro Basisartikel von beliebigen Lieferanten Xj sein, d.h. einige Komponenten von X1, andere von X2 und weitere von einem Lieferanten Xk, welcher die Daten zu den Komponenten Xkr gerade erst mündlich, schriftlich oder sonstwie übermittelt hat. Der Anwender erfasst diese Daten unter seiner eigenen Relation und ist damit für deren Richtigkeit selbst verantwortlich. Ab sofort kann er diese Komponenten in seine eigenen Sets einbauen und verwenden. (Man könnte diese Sets als Hausmischung bezeichnen).

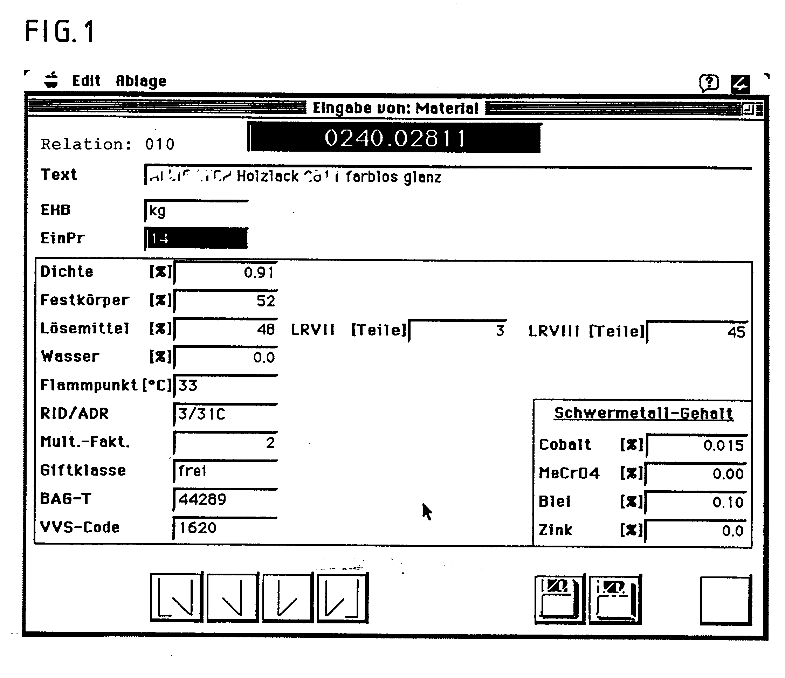

Ein Ausführungsbeispiel, wiederum das Malergewerbe betreffend, wird im folgenden noch anschaulich anhand von in den Figuren 1 bis 4 der Zeichnung dargestellten, geeigneten Bildschirm-Masken beschrieben:

Die Maske nach Fig. 1 dient der Erfassung von Komponenten zu einem bestimmten Material bei der Source mit der Relation 010. Parameter für Aenderungsbefugnis von Feldinhalten durch andere Sources sind "global", d.h. für alle Komponenten gemeinsam festgelegt.

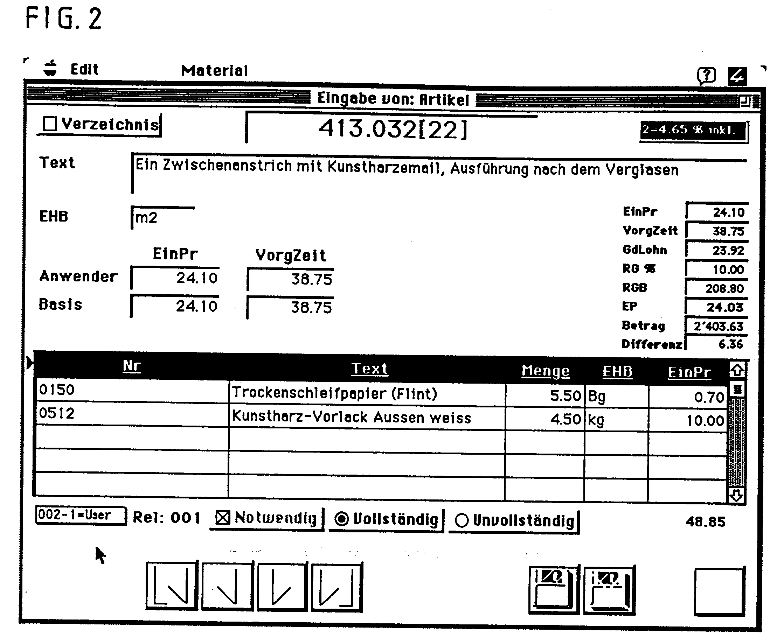

Die Maske gemäss Fig. 2 betrifft einen bestimmten Basisartikel, der von der Source mit der Relation 001 erzeugt wurde und das Set-Attribut "Notwendig" erhalten hat. Die Source mit der Relation 002 verwendet diesen Basisartikel gerade für die Erzeugung eines eigenen Sets; dabei kann das Attribut "Notwendig" eingesehen, aber nicht verändert werden. Das erzeugte Set 002-1 wird von der Source 002 als "Vollständig" deklariert.

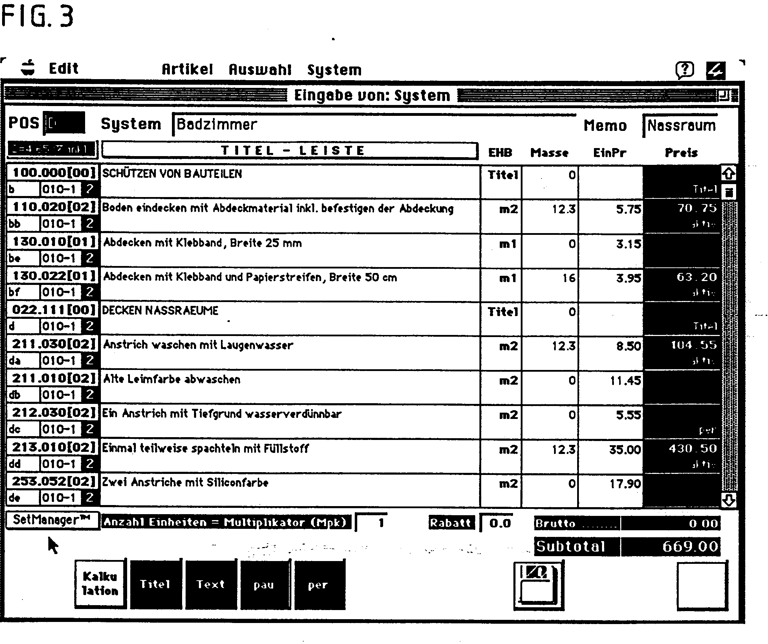

Die Source mit der Relation 002 will nun das System "Badzimmer" offerieren, welches aus mehreren Basisartikeln besteht. Hierzu dient die Maske nach Fig. 3. Im vorliegenden Fall soll das ganze System mittels vorhandener Sets 010-1 realisiert bzw. offeriert werden. Das Popup "SetManager" enthält alle existierenden (gespeicherten) Sets, z.B. 001-1, 002-1, 002-2, 010-1, 010-2, 010-3 usw. Falls ein Basisartikel mit einem anderen Set verknüpft werden soll, bedarf es der Maus-Aktionen
- Wahl des Artikels (click im betreffenden Feld)
- Anwählen des Feldes "SetManager" und Wahl des Sets.

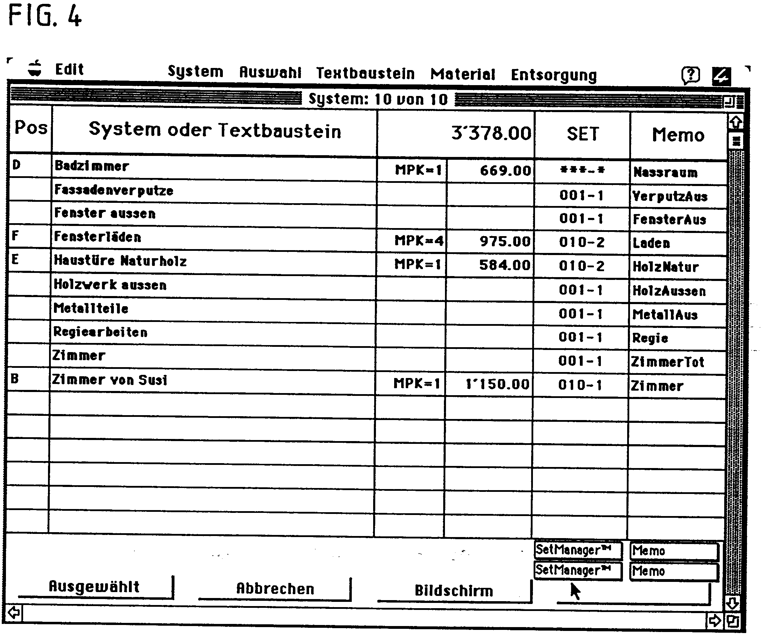

Fig. 4 zeigt das nun vollständige Set-Verzeichnis für die Offerte. Entgegen der ursprünglichen Absicht, für das System "Badzimmer" nur Sets 010-1 zu verwenden, wurde mindestens ein anderes Set gewählt, was in der Spalte "SET" durch ***-* zum Ausdruck kommt. Die Systeme "Fensterläden" und "Haustüre Naturholz" werden mittels Sets 010-2 offeriert, wobei aus der Set-Nummer 2 hervorgeht, dass wasserlösliche Produkte vorgeschlagen werden. Das System "Zimmer von Susi" wird mit Sets 010-1 offeriert (Nummer 1: konventionelle Anstrichstoffe).

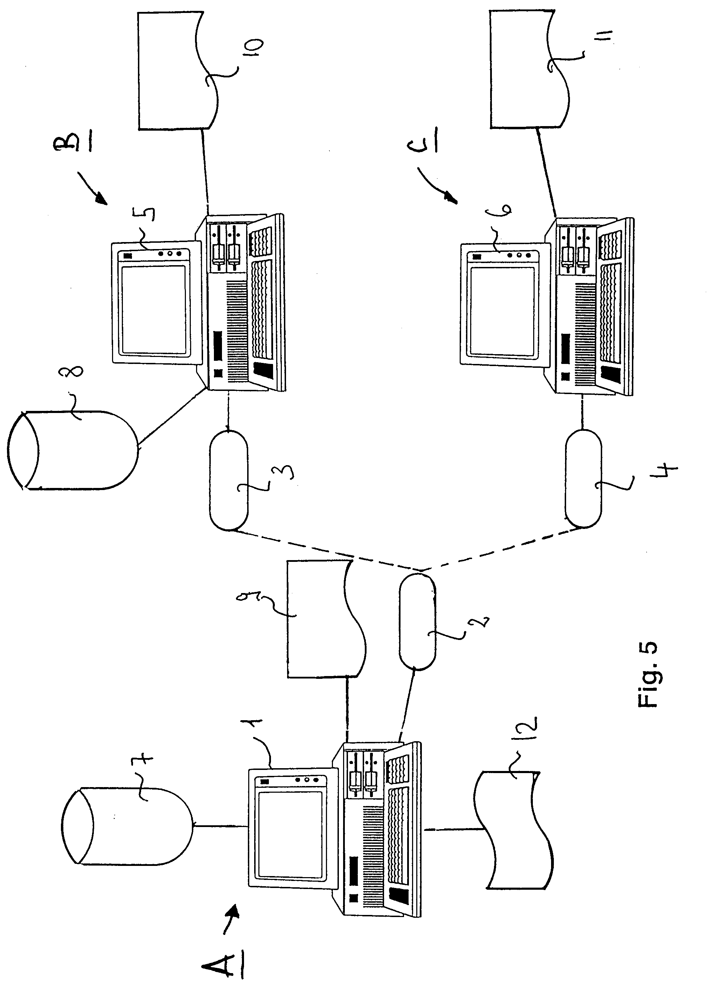

Fig. 5 zeigt als weiteres Ausführungsbeispel den eigentlichen Systemaufbau einer zentralen Datenbank-Anordnung bei der mittels einer Konfiguration von wenigstens drei Rechnern, integriert in Personal-Computer, im Rahmen einer Malerorganisation von bezugsberechtigten Mitgliedern umweltrelevante Angaben zu Farben und Lacken abgerufen werden können.

Im einzelnen zeigt die beispielhafte Anordnung eine zentrale Datenbank-Station **A**, gebildet aus einem Personalcomputer **1**, einem ersten Modem **2**, einer zentralen Produkte-Datenbank **7** und einem ersten Drucker **9**. Ueber das erste Modem **2** und ein entsprechendes zweites Modem **3** sowie ein drittes Modem **4** kann mit zwei weiteren Personal-Computern **5** und **6** einer sogenannten Produzenten-Station **B** bzw. einer Produkte-Anwender-Station **C** kommuniziert werden. Diese Stationen können also im Berechtigungsmodus mit der zentralen Datenbank verkehren.

Der gleiche Zweck kann hingegen auch dadurch erreicht werden, dass über einen zweiten Drucker **10** der Produzenten-Station **B** oder über einen dritten Drucker **11** der Produkte-Anwender-Station **C** die gewünschten Daten ausgedruckt werden.

Anfrageergebnisse an die zentrale Produkte-Datenbank **7** können also im ON-LINE Mode an den jeweiligen Personal-Computer **5** der Produzenten-Station **B** oder an den Personal-Computer **6** der Produkte-Anwender-Station **C** transferiert werden und/oder als Batch-Verarbeitung im Ausdruck geliefert werden.

Die Produkte-Anbieter können selbstverständlich jederzeit neue Daten in das System einspeisen, allerdings vorderhand einmal nur in eine lokale Produkte-Datenbank **8**. Nach enstprechender Prüfung dieser Daten durch Berechtigte der zentralen ProdukteDatenbank **7** stehen solche Produkte-Daten dann auch allen berechtigten Produkte-Anwendern an der oder den Stationen **C** zur Verfügung.

Der Einfachheit und Uebersichtlichkeit halber bestehen im dargestellten Ausführungsbeispiel die Produzenten-Station **B** und die Produkte-Anwender-Station **C** aus nur je einem einzigen Personalcomputer, einem einzigen Drucker und ferner die Produzenten-Station **B** aus der einzigen lokalen Produkte-Datenbank **8**. In aller Regel sind hingegen an der Produzenten-Seite wie auch an der Produkte-Anwender-Seite eine Vielzahl von Stationen angeschlossen.

Im vorgestellten Ausführungsbeispiel erlaubt damit die zentrale Produkte-Datenbank **7** einen permanenten Feedback mit den erwünschten und/oder erwarteten Umweltvorschriften und ist in der Lage, mit Hilfe von Messungen an zu bearbeitenden Gebäuden gewonnene Ergebnisse,
wie beispielsweise
- Streichfähigkeit: kg Farbe pro m²
- Abwaschwasser: Messung des pH-Wertes und Rückschluss auf vorgängig verwendete Farbe
- Verdünnfähigkeit → Lösungsmittelgehalt

aufgrund folgender Kriterien Produktedeklarationen zu liefern:
- Dichte des Anstrichstoffes → Streichfähigkeit
- Massgabe des Festkörpergehaltes
- Massgabe des Lösungsmittelgehaltes
- Angabe des Wassergehaltes → Verdünnfähigkeit
- Angabe der Art und Menge der umweltrelevanten Schwermetalle.

Es kann also beispielsweise aus der Messung des pro m² benötigten Abwaschwassers der zu bearbeitenden Wand-(Mauer)-fläche auf die Rauigkeit des Untergrundes und auf den früheren Anstrich (Farbzusammensetzung) geschlossen werden und ausgehend von dieser Messung auf Kritereien geschlossen werden, die für einen Neuanstrich relevant sind.

Im übrigen ist die zentrale Produkte-Datenbank **7** mit einem *Briefkasten* verbunden, in dem Anfragen an die Produkte-Datenbank **7** ablegbar sind, wenn zum entsprechenden Zeitpunkt kein On-Line-Betrieb möglich ist.

## Patentansprüche

1. Verfahren zur Datenverarbeitung in einem rechnergesteuer ten Kommunikationsnetzwerk mit mehreren, Datenquellen bildenden Teilnehmern, dadurch **gekennzeichnet**,
dass von den Teilnehmern, ausgehend von gespeicherten Basisdaten, individuelle Datensätze (Sets) erzeugt und den andern Teilnehmern zur Verfügung gestellt werden, wobei jeder erzeugte Datensatz mit einem dem erzeugenden Teilnehmer eindeutig zugeordneten Code (Relation) und mit mindestens einem Attribut, für welches der Erzeuger allein verantwortlich ist, versehen wird.

2. Verfahren zur Datenverarbeitung mittels einem Rechner, dadurch **gekennzeichnet**,
dass, ausgehend von gespeicherten Basisdaten und mit diesen verknüpft, qualitativ unterschiedliche Datensätze (Sets) erzeugt und gespeichert werden, wobei jeder erzeugte Datensatz mit einem seiner Qualität eindeutig zugeordneten Code (Relation) und mit mindestens einem Attribut versehen wird, welches nur unter bestimmten, von der Qualität abhängigen Umständen geändert werden darf.

3. System zur Durchführung des Verfahrens nach Anspruch 1 oder 2, dadurch **gekennzeichnet**,
dass wenigstens ein Personalcomputer (**5**) einer Produzenten-Station (**B**) und wenigstens ein weiterer Personalcomputer (**6**) einer Produkte-Anwender-Station (**C**) über ein zweites Modem (**3**) und ein drittes Modem (**4**) über ein zentrales Modem (**2**) eines ersten Personalcomputers (**1**) miteinander so verknüpft sind, dass sich Produktedaten wenigstens einer lokalen Produkte-Datenbank (**8**) nach entsprechender Prüfung in eine zentrale Produkte-Datenbank (**7**) so integrieren lassen, dass sie sich von bezugberechtigten Produkte-Anwendern des Personal-Computers (**6**) einer ProdukteAnwender-Station (**C**) nach entsprechenden Anwender-Kriterien abfragen lassen.
